# FASCICULE DE BREVET EUROPEEN

(11) **EP 0 511 054 B1**
(45) Date de publication et mention de la délivrance du brevet: **28.12.1994**
(21) Numéro de dépôt: 92401077.0
(22) Date de dépôt: 17.04.1992
(51) Int. Cl.: F16F 13/00

(54) **Perfectionnements aux manchons antivibratoires hydrauliques**
Verbesserungen zu hydraulischen Antischwingungsbuchsen
Improvements to hydraulic anti-vibration bushes

(30) Priorité: 23.04.1991 FR 9104998
(43) Date de publication de la demande: 28.10.1992
(73) Titulaire: HUTCHINSON, F-75008 Paris (FR)
(72) Inventeur: Bouhier, Bernard, F-18100 Vierzon (FR)
(74) Mandataire: Behaghel, Pierre

(56) Documents cités:
- EP-A- 0 234 966
- EP-A- 0 242 254
- EP-A- 0 306 369

## Description

L'invention est relative aux manchons antivibratoires hydrauliques comprenant deux armatures rigides tubulaires s'entourant l'une l'autre et de préférence de révolution au moins en partie autour d'un axe Z, coaxiales et concentriques au moins sous charge, armatures réunies entre elles par un corps en élastomère conformé de façon à former avec celles-ci au moins deux poches étanches opposées diamétralement selon une direction X et communiquant entre elles par un canal étroit, l'ensemble desdites poches et dudit canal étant rempli d'un liquide amortisseur.

De tels manchons sont destinés à être montés aux fins de liaison -voire de support proprement dit- et d'amortissement entre deux pièces rigides solidarisables respectivement avec les deux armatures et susceptibles de subir l'une par rapport à l'autre des oscillations orientées selon la direction diamétrale X, l'ensemble étant agencé de façon telle que, pour certaines au moins de ces oscillations, le liquide soit refoulé alternativement de l'une des poches vers l'autre et inversement à travers le canal étroit, ce qui crée dans ce liquide, pour une fréquence donnée des oscillations dépendant des cotes dudit canal, un phénomène de résonance propre à amortir la transmission de ces oscillations de l'une des armatures à l'autre.

Les manchons du genre en question sont par exemple destinés à être interposés entre, d'une part, un châssis ou caisse de véhicule et, d'autre part, le moteur à combustion interne ou le train avant ou arrière de ce véhicule.

L'invention concerne plus particulièrement, parmi les manchons ci-dessus, ceux pour lesquels le canal étroit est délimité extérieurement par la face cylindrique intérieure d'une portion de l'armature tubulaire interne comprise entre ses deux extrémités axiales et intérieurement par une gorge évidée dans la face cylindrique extérieure d'une bague au moins partielle logée jointivement dans ladite portion, ladite gorge reliant entre elles deux lumières radiales évidées dans ladite armature, laquelle présente une entrée axiale suffisamment large pour livrer accès à la bague et demeure dégagée même après moulage du corps en élastomère.

Dans les modes de réalisation actuellement connus des manchons du genre en question (voir par exemple les figures 3 à 5 du document EP-A-0 306 369), la pièce rainurée ou "bague" délimitant intérieurement le canal étroit était une "tuile" incurvée montée avec un léger jeu dans un tunnel incurvé de profil complémentaire de façon à pouvoir coulisser angulairement autour de l'axe Z et à assurer ainsi un effet de "découplage" vis-à-vis des vibrations à relativement haute fréquence et faible amplitude.

Dans une telle construction, le tunnel qui reçoit la tuile mobile est fermé latéralement et définitivement sur tout son pourtour à la fin du montage.

Une telle solution convient pour les grandes séries pour lesquelles on connaît à l'avance avec précision les cotes à donner au canal étroit.

Mais elle ne convient pas pour les séries d'importance limitée ou pour les prototypes, cas dans lesquels on désire pouvoir modifier facilement les cotes du canal étroit en fonction des besoins.

L'invention a pour but, surtout, de rendre les manchons du genre en question tels qu'ils se prêtent facilement à de telles modifications.

A cet effet, les manchons antivibratoires hydrauliques du genre indiqué sont essentiellement caractérisés, selon l'invention, en ce que leur armature tubulaire interne présente, au fond de son entrée axiale, un logement cylindrique recevant la bague, ici continue, jointivement par emmanchement à force, le fond de ce logement cylindrique étant délimité par une portée annulaire transversale rentrante qui forme butée axiale pour la bague.

La bague peut alors être mise en place, par ledit emmanchement à force, depuis l'extérieur du manchon, et être ensuite remplacée par d'autres bagues moyennant de simples déplacements relatifs axiaux des bagues concernées par rapport au manchon.

Pour réaliser l'étanchéité nécessaire vis-à-vis du liquide entre l'intérieur du canal étroit et l'extérieur du manchon, on procède avantageusement de l'une et/ou l'autre des deux manières suivantes :
- la face cylindrique intérieure du logement destiné à être occupé jointivement par la bague est tapissée par une couche d'un matériau élastomère, laquelle est de préférence venue de moulage en même temps que le corps en élastomère reliant les deux armatures,
- la bague est elle-même constituée en un matériau souple, notamment en élastomère, et elle est de préférence renforcée par une armature cylindrique rigide noyée dans ledit matériau.

L'invention comprend, mises à part ces dispositions principales, certaines autres dispositions qui s'utilisent de préférence en même temps et dont il sera plus explicitement question ci-après.

Dans ce qui suit, l'on va décrire quelques modes de réalisation préférés de l'invention en se référant au dessin ci-annexé d'une manière bien entendu non limitative.

Les figures 1 et 2, de ce dessin, montrent un manchon antivibratoire hydraulique établi selon l'invention, respectivement en coupe transversale selon I-I figure 2 et en coupe axiale selon II-II figure 1.

Les figures 3 et 4 montrent une variante encore conforme à l'invention d'une bague centrale comprise par le dispositif ci-dessus, respectivement en coupe axiale selon III-III figure 4 et en coupe transversale selon IV-IV figure 3.

Dans chaque cas le manchon comprend :
- une armature métallique tubulaire interne de révolution 1,
- une armature métallique tubulaire externe de révolution 2 qui entoure l'armature 1 et qui, pour l'état de repos du manchon, est coaxiale à cette armature 1, l'axe Z commun à ces deux armatures étant orienté verticalement,
- et un corps en élastomère 3 reliant l'une à l'autre les deux armatures 1 et 2 en ménageant entre celles-ci deux poches étanches A et B diamétralement opposées selon une direction horizontale X.

L'armature interne 1 est par exemple destinée à être solidarisée avec une platine 4 faisant partie d'un train de suspension de véhicule, platine appliquée contre une extrémité axiale de cette armature, ladite solidarisation étant effectuée à l'aide d'un boulon 5 qui traverse l'armature jointivement, puis la platine, et d'un écrou 6 vissé sur l'extrémité de ce boulon.

L'armature externe 2 est alors destinée à être solidarisée avec un logement cylindrique ou palier (non représenté) faisant partie du châssis dudit véhicule.

Les deux poches A et B sont réunies entre elles par un canal étroit 7 et ces deux poches ainsi que ce canal sont remplies d'un liquide amortisseur.

C'est essentiellement sur la réalisation du canal 7 que porte la présente invention.

Ce canal est ici délimité intérieurement par une gorge 8 s'étendant selon un arc de cercle évidé dans la face cylindrique extérieure d'une bague 9 et extérieurement par la face cylindrique intérieure 10 d'un tronçon central de l'armature interne 1.

Cette face 10 est évidée radialement selon la direction X par deux lumières 11 débouchant respectivement dans les deux poches A et B.

La face 10 est pratiquement complémentaire de la face cylindrique extérieure de la bague 9 de sorte que cette dernière peut être logée jointivement, par emmanchement à force, dans la première.

Ladite face 10 est prolongée à l'une de ses deux extrémités axiales par un épaulement transversal intérieur 12 formant butée axiale pour la bague 9 et, à son autre extrémité axiale, par un évidement cylindrique 13 débouchant à l'extérieur de l'armature tubulaire 1 et propre à livrer passage à la bague 9.

De la sorte, cette bague 9 peut être à tout instant mise en place à l'intérieur de l'armature 1, à partir de l'extérieur du manchon.

En particulier, il est possible d'assembler le corps en élastomère 3 sur les deux armatures 1 et 2 -en particulier par moulage de ce corps 3 sur l'armature 1 et sur une armature ajourée intermédiaire 2' elle-même emmanchée à force dans l'armature 2- avant même la mise en place de la bague 9 à l'intérieur de l'armature 1.

Pour ce qui est de l'étanchéité à réaliser entre la bague et l'armature, afin d'éviter toute fuite du liquide contenu dans le canal étroit 7 vers l'extérieur du manchon, on procède avantageusement de l'une des deux façons explicitées ci-après.

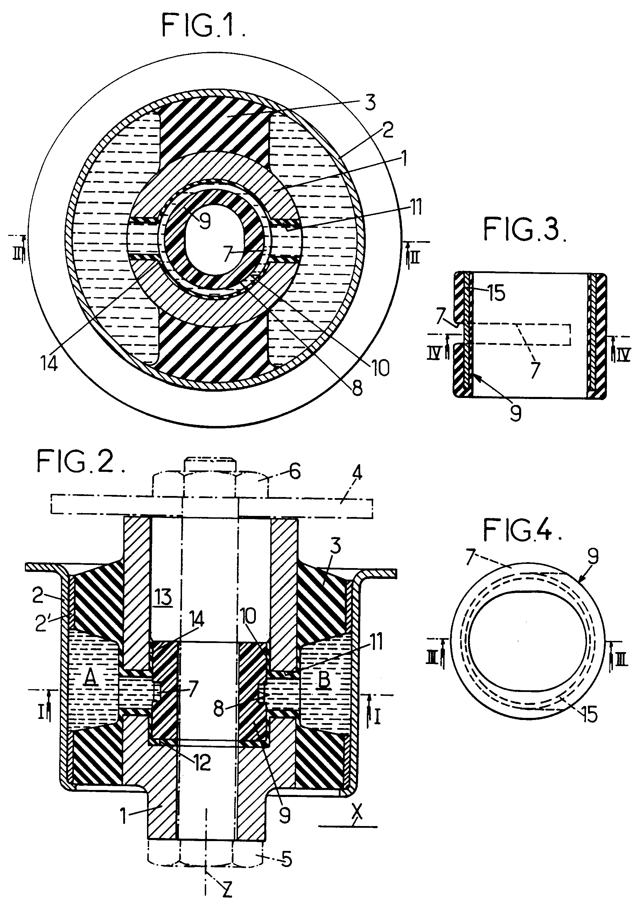

Selon une première formule, illustrée sur les figures 1 et 2, et surtout applicable dans le cas où la bague 9 est constituée en un matériau rigide tel qu'une polyamide ou autre matière plastique, la face cylindrique intérieure 10 de l'armature tubulaire interne 1 est tapissée par une couche élastique 14 qui est avantageusement venue de moulage avec le corps 3.

Cette couche, écrasée radialement entre la bague 9 et la face 10 lors de l'emmanchement à force axial de la première dans la seconde, constitue alors joint d'étanchéité.

Dans une seconde formule illustrée sur les figures 3 et 4, c'est la bague 9 elle-même qui est constituée en un matériau suffisamment élastique tel qu'un élastomère : dans ce cas, c'est l'application même de la bague 9 contre la face 10 qui assure l'étanchéité désirée, ce pour quoi on prévoit avantageusement un léger surdimensionnement radial de la bague.

Dans ce dernier cas, ladite bague est avantageusement renforcée par une armature cylindrique rigide interne 15 noyée dans celle-ci.

En suite de quoi, et quel que soit le mode de réalisation adopté, on obtient finalement un manchon antivibratoire hydraulique dont la constitution résulte suffisamment de ce qui précède.

On comprend facilement que, avec un tel manchon, il est possible de ne monter la bague 9 que tout à fait à la fin de la fabrication, c'est-à-dire après moulage, vulcanisation et mise en place du corps 3 adhéré sur les deux armatures 1 et 2.

Le montage en question de la bague 9 dans le manchon se fait par simple emmanchement à force de cette bague à l'intérieur de l'armature 1, à travers l'évidement 13, l'étanchéité désirée étant assurée automatiquement par ce simple emmanchement, ainsi que le blocage axial de la bague en sa position finale, du fait des frottements engendrés par la compression des portions élastiques.

Il est donc possible de monter à volonté, dans un même manchon, des bagues 9 comprenant des gorges 8 de cotes (section et longueur) très différentes, ce qui permet de régler facilement dans chaque cas la valeur de la fréquence des oscillations qui sont amorties au mieux par le manchon considéré.

La solution proposée permet même, le cas échéant, de remplacer la bague 9 par une autre et donc de modifier à volonté les cotes du canal étroit 7 et la fréquence de résonance correspondante.

## Revendications

1. Manchon antivibratoire hydraulique comprenant deux armatures rigides tubulaires (1,2) s'entourant l'une l'autre et réunies entre elles par un corps en élastomère (3) conformé de façon à former avec celles-ci au moins deux poches étanches (A,B) opposées diamétralement communiquant entre elles par un canal étroit (7), l'ensemble desdites poches et dudit canal étant rempli d'un liquide amortisseur, le canal étroit (7) étant délimité extérieurement par la face cylindrique intérieure (10) d'une portion de l'armature tubulaire interne (1) comprise entre ses deux extrémités axiales et intérieurement par une gorge (8) évidée dans la face cylindrique extérieure d'une bague au moins partielle (9) logée jointivement dans ladite portion, ladite gorge reliant entre elles deux lumières radiales (11) évidées dans ladite armature, laquelle présente une entrée axiale (13) suffisamment large pour livrer accès à la bague (9) et demeure dégagée même après moulage du corps en élastomère (3), caractérisé en ce que ladite armature tubulaire interne (1) présente en outre, au fond de son entrée axiale (13), un logement cylindrique (10) recevant ladite bague (9), ici continue, jointivement par emmanchement à force, le fond de ce logement cylindrique étant délimité par une portée annulaire transversale rentrante (12) qui forme butée axiale pour la bague (1).

2. Manchon antivibratoire selon la revendication 1, caractérisé en ce que la face cylindrique intérieure du logement (10) destiné à être occupé jointivement par la bague (9) est tapissée par une couche (14) d'un matériau élastomère, laquelle est de préférence venue de moulage en même temps que le corps en élastomère (3) reliant les deux armatures.

3. Manchon antivibratoire selon l'une quelconque des précédentes revendications, caractérisé en ce que la bague (9) est elle-même constituée en un matériau souple, notamment en élastomère.

4. Manchon antivibratoire selon la revendication 3, caractérisé en ce que la bague (9) est renforcée par une armature cylindrique rigide (15) noyée dans le matériau souple.

## Claims

1. Hydraulic antivibration bushing mount comprising two rigid tubular endpieces (1, 2) one surrounding the other, the endpieces being connected together by an elastomer body (3) shaped so as to form together therewith at least two diametrically opposite liquid-tight pockets (A, B) that communicate with each other via a narrow channel (7), said pockets and said channel being filled with a damping liquid, the narrow channel (7) being delimited on the outside by the inside cylindrical face (10) of a portion of the inner tubular endpiece (1) comprised between its two axial ends and being delimited on the inside by a groove (8) formed in the outer cylindrical face of an at least partial ring (9) received in and making contact with said portion, said groove inter-connecting two radial openings (11) formed through said endpiece, which endpiece (1) presents an axial inlet (13) that is large enough to provide access for the ring (9), which access remains available even after the elastomer body (3) has been molded, characterized in that said inner tubular endpiece further presents, at the end of its axial inlet, a cylindrical housing (10) suitable for receiving said ring (9), here continuous, and for making contact therewith by means of a force-fit, the end of said cylindrical housing being delimited by an inwardly directed transverse annular bearing surface (12) constituting an axial abutment for the ring (1).

2. Antivibration mount according to claim 1, characterized in that the inside cylindrical face of the housing (10) for receiving and for making contact with the ring (9) is lined with a layer (14) of elastomer material, which material is preferably integrally molded with the elastomer body (3) connecting the two endpieces together.

3. Antivibration mount according to any one of the preceding claims, characterized in that the ring (9) is itself made of a flexible material, in particular an elastomer.

4. Antivibration mount according to claim 3, characterized in that the ring (9) is reinforced by a rigid cylindrical reinforcement (15) embedded in the flexible material.

## Patentansprüche

1. Hydraulische Antischwingungsvorrichtung, die aus zwei starren, rohrförmigen Armaturen (1, 2) besteht, von denen die eine die andere umgibt und die miteinander durch einen Körper (3) aus elastomerem Material verbunden sind, der so ausgebildet ist, daß er mit diesen wenigstens zwei dichte Taschen (A, B) bildet, die sich diametral gegenüberliegen und untereinander über einen verengten Durchgang (7) miteinander verbunden sind, wobei die Taschen und der Kanal gemeinsam mit einer Dämpfungsflüssigkeit gefüllt sind und der verengte Durchgang (7) außen durch die innere, zylindrische Oberfläche (10) eines Abschnittes der inneren, rohrförmigen Armatur (1) der zwischen den beiden axialen Enden liegt und innen durch eine Rinne (8) begrenzt wird, die in der äußeren, zylindrischen Oberfläche eines wenigstens teilweise gebildeten Ringes ausgenommen ist, der dicht in den erwähnten Abschnitt eingesetzt ist, die Rinne zwei radiale Öffnungen (11) miteinander verbindet, die in der Armatur ausgenommen sind und die Armatur einen axialen Zugang (13) aufweist, der ausreichend groß ist, um den Ring (9) einzusetzen und der selbst nach der Verformung des Körpers aus elastomerem Material freibleibt, dadurch gekennzeichnet, daß die innere, rohrförmige Armatur (1) darüber hinaus am Boden des axialen Zugangs (13) ein zylindrisches Lager (10) aufweist, das den hier durchgehenden Ring (9) dicht durch Einsetzen unter Kraftaufwand aufnimmt, wobei der Boden des zylindrischen Lagers durch einen ringförmigen, in Querrichtung verlaufenden einspringenden Flansch (12) begrenzt wird, der einen axialen Anschlag für den Ring (1) bildet.

2. Antischwingungslager nach Anspruch 1, dadurch gekennzeichnet, daß die zylindrische innere Oberfläche des Lagers (10), die dazu dient, den Ring (9) dicht aufzunehmen, mit einer Schicht (14) aus einem elastomerem Material bedeckt ist, das vorzugsweise gleichzeitig mit dem Körper (3) aus elastomerem Material, der die beiden Armaturen verbindet, durch Verformung hergestellt ist.

3. Antischwingungsvorrichtung nach einem der vorhergehenden Ansprüche, dadurch gekennzeichnet, daß der Ring (9) selbst aus einem nachgiebigen, insbesondere elastomerem Material besteht.

4. Antischwingungsvorrichtung nach Anspruch 3, dadurch gekennzeichnet, daß der Ring (9) durch eine starre, zylindrische Armatur (15) verstärkt ist, die in das nachgiebige Material eingebettet ist.
